# EUROPEAN PATENT APPLICATION

(11) **EP 4 807 204 A1**
(43) Date of publication of application: **16.09.2026**
(21) Application number: 26162706.1
(22) Date of filing: 05.03.2026
(51) Int. Cl.: F16C 1/10

(54) **CABLE CONNECTING DEVICE**

(30) Priority: 12.03.2025 JP 2025039569
(71) Applicant: Suzuki Motor Corporation, Hamamatsu-shi, Shizuoka 432-8611 (JP)
(72) Inventor: KOBAYASHI, Ginga, Shizuoka, 432-8611 (JP)
(74) Representative: Haseltine Lake Kempner LLP

(57) **Abstract**

A cable connecting device (20) connects a first cable (11) extending from am operator and a second cable (11) extending from an operation target. The cable connecting device includes a pair of joint caps (21, 31) attached to outer tubes of the first and second cables, a joint slider (41) on which inner wires of the first and second cables are hooked, and a joint case (45) with the pair of joint caps attached to both ends and the joint slider accommodated inside. Each joint cap includes a plurality of cap parts (22, 32), and parting surfaces of the plurality of cap parts are in contact with each other so as to be separable from each other. The joint caps fit into both ends of the joint case, thereby maintaining integrity of the plurality of cap parts.

## Description

### TECHNICAL FIELD

The present invention relates to a cable connecting device.

### BACKGROUND ART

When a smart key is used, an emergency key cylinder is provided for emergencies (such as dead battery or lost key). Known examples of emergency key cylinders include those in which an emergency key cylinder is integrally formed on a back side of an unlocking switch (see, for example, Patent Literature 1), and those in which an emergency key cylinder is formed integrally with an unlocking actuator (see, for example, Patent Literature 2). Because configurations described in Patent Literatures 1 and 2 are complex, a configuration is also being considered in which two cables are extended from an unlocking switch and an emergency key cylinder and connected via a joint to a single cable extending from an unlocking target.

### CITATION LIST

### PATENT LITERATURE

Patent Literature 1: JP2015-135035A
Patent Literature 2: JP2008-230292A

### SUMMARY OF INVENTION

### TECHNICAL PROBLEM

Typically, in a configuration in which a plurality of cables are connected by a joint, a slider is accommodated within a joint case, and each cable is connected to this slider. The joint case has an upper and lower split structure, and upper and lower joint case parts are connected with a snap fit. This causes a problem in that a shape of the joint case becomes complicated.

The present invention has been made in consideration of the above-described points, and has an object to provide a cable connecting device capable of connecting a plurality of cables with a simple configuration.

### SOLUTION TO PROBLEM

A cable connecting device according to an aspect of the present invention is a cable connecting device configured to connect a first cable extending from an operator and a second cable extending from an operation target and configured to transmit tension from the first cable to the second cable, the device including a pair of joint caps attached to outer tubes of the first cable and the second cable, a joint slider on which inner wires protruding from the outer tubes of the first cable and the second cable are hooked, and a joint case formed in a cylindrical shape with both ends open, the pair of joint caps attached to both ends, and the joint slider accommodated inside, where each of the joint caps includes a plurality of cap parts divided in a cable radial direction, and parting surfaces of the plurality of cap parts are in contact with each other so as to be separable from each other, and the joint case is formed in an inseparable cylindrical shape, and integrity of the plurality of cap parts is maintained by inserting each of the joint caps into both ends of the joint case.

### ADVANTAGEOUS EFFECTS OF INVENTION

According to the cable connecting device of the aspect of the present invention, when the first cable is operated by the operator, the joint slider slides within the joint case and tension is transmitted to the second cable, thereby operating the operation target. Furthermore, since the integrity of the plurality of cap parts of each joint cap is maintained by the joint case having an inseparable cylindrical shape, the joint case does not become complicated by claw shapes such as snap fits.

### BRIEF DESCRIPTION OF DRAWINGS

FIG. 1 is a schematic diagram of a cable-type unlocking system according to an example.
FIG. 2 is a perspective view of a cable connecting device of the example.
FIG. 3 is an exploded perspective view of the cable connecting device of the example.
FIG. 4 is an exploded perspective view of the cable connecting device of the example.
FIG. 5 is a plan view of the cable connecting device of the example.
FIG. 6 is a cross-sectional view of the cable connecting device of FIG. 5 taken along a line A-A.
FIG. 7 is a cross-sectional view of the cable connecting device of FIG. 5 taken along a line B-B.
FIG. 8 is a schematic diagram of a cable-type unlocking system of a modification example.

### DESCRIPTION OF EMBODIMENTS

A cable connecting device according to an aspect of the present invention connects a first cable extending from an operator and a second cable extending from an operation target, and transmits tension from the first cable to the second cable. A pair of joint caps are attached to outer tubes of the first cable and the second cable, and inner wires protruding from the outer tubes of the first cable and the second cable are hooked onto a joint slider. A joint case is formed in a cylindrical shape with both ends open, the pair of joint caps are attached to both ends of the joint case, and the joint slider is accommodated inside the joint case. Each of the joint caps is composed of a plurality of cap parts divided in a cable radial direction, and parting surfaces of the plurality of cap parts are in contact with each other so as to be separable from each other. The joint case is formed in an inseparable cylindrical shape, and the joint caps fit into both ends of the joint case, thereby maintaining integrity of the plurality of cap parts. When the first cable is operated by the operator, the joint slider slides within the joint case and tension is transmitted to the second cable, thereby operating the operation target. Furthermore, since the integrity of the plurality of cap parts of each joint cap is maintained by the joint case having an inseparable cylindrical shape, the joint case does not become complicated by claw shapes such as snap fits.

### [Example]

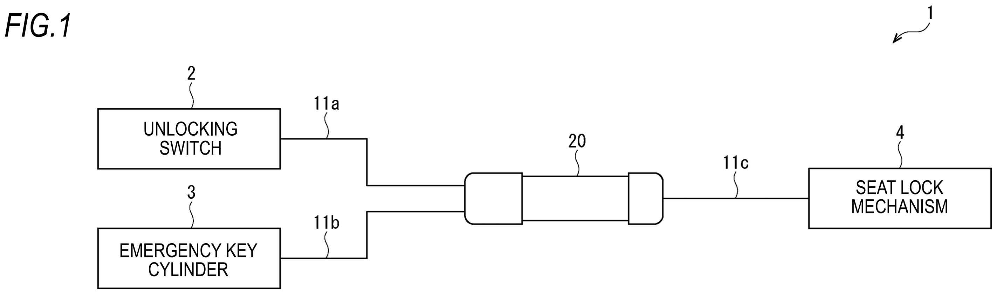

Hereinafter, a cable-type unlocking system using a cable connecting device of this example will be described with reference to the accompanying drawings. FIG. 1 is a schematic diagram of the cable-type unlocking system according to the present embodiment.

As illustrated in FIG. 1, a cable-type unlocking system 1 for a saddle-type vehicle is provided with an emergency key cylinder (operator) 3 in addition to an unlocking switch (operator) 2 for a smart key. A seat lock mechanism (operation target) 4 can be operated by two systems: a main system on the unlocking switch 2 side and a backup system on the emergency key cylinder 3 side. Seat lock cables (first cables) 11a, 11b extend from the unlocking switch 2 and the emergency key cylinder 3, and a seat lock cable (second cable) 11c extends from the seat lock mechanism 4.

The seat lock cables 11a, 11b and the seat lock cable 11c are connected via a cable connecting device 20. Tension is transmitted from one of the seat lock cables 11a and 11b to the seat lock cable 11c via the cable connecting device 20. When an actuator (not illustrated) provided in the unlocking switch 2 is driven, the seat lock mechanism 4 is operated via the seat lock cable 11a. By turning a key inserted in the emergency key cylinder 3, the seat lock mechanism 4 is operated via the seat lock cable 11b.

In a typical cable connecting device, each cable is connected by a crimping structure of a metal cap. For this reason, there are problems in that the cables can be pulled out of the cable connecting device by a small load, causing the cable connecting device to be damaged and reducing anti-theft performance. Furthermore, when the entire cable connecting device is formed in an upper and lower split structure, the case structure becomes complicated and the entire case must be covered with a waterproof cap. Therefore, in the cable-type unlocking system 1 of this example, the cable connecting device 20 is used, which takes into consideration the above-mentioned durability, anti-theft performance, simple structure, and waterproof properties.

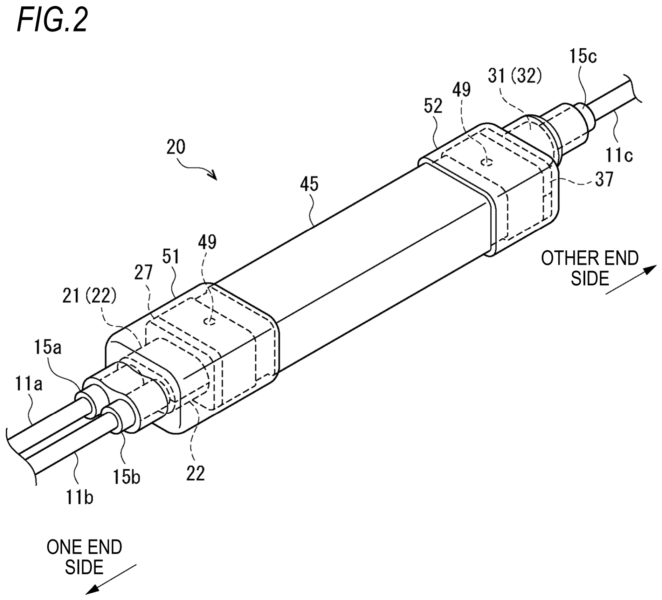

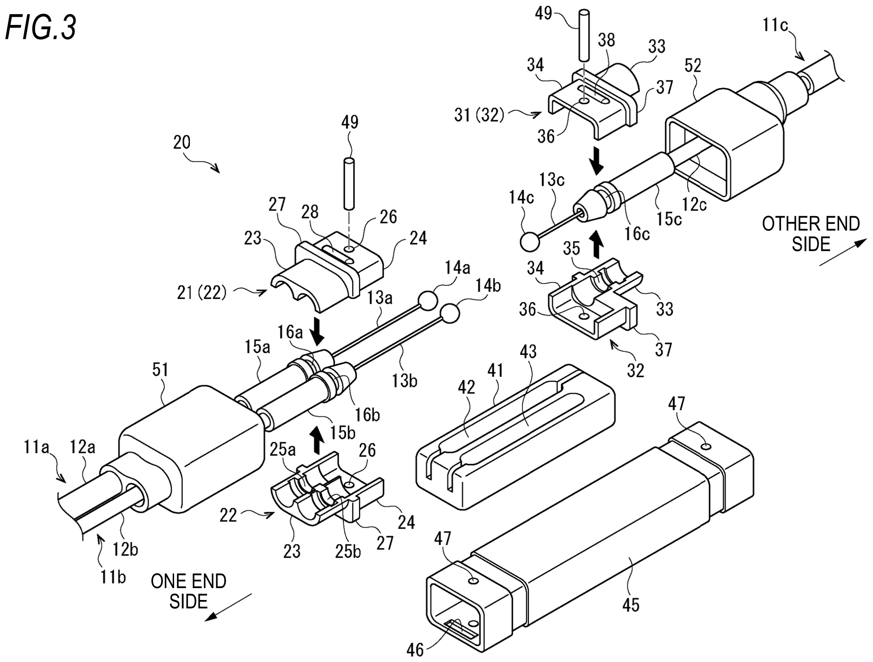

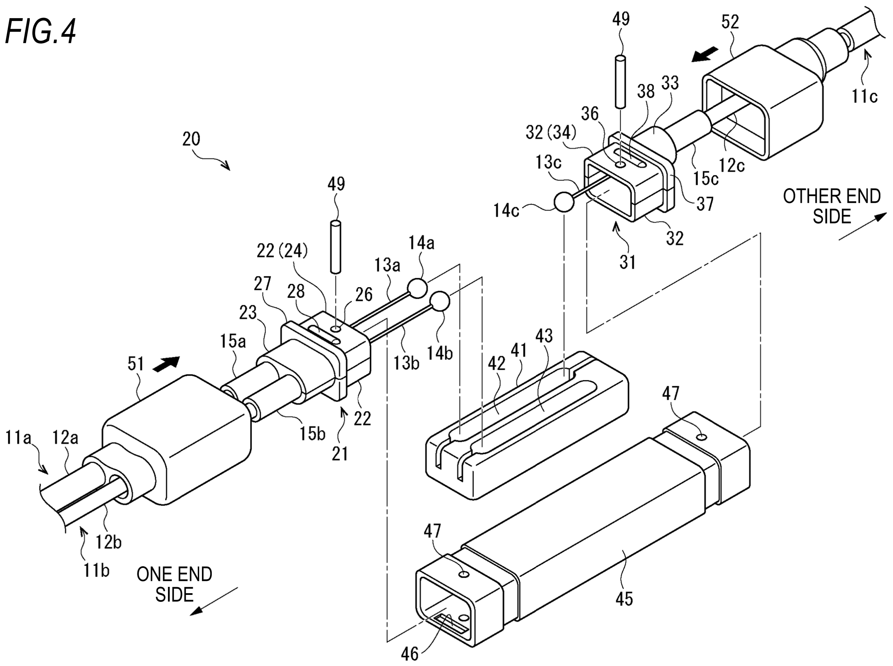

The detailed configuration of the cable connecting device will be described below with reference to FIGS. 2 to 4. FIG. 2 is a perspective view of the cable connecting device of this example. FIGS. 3 and 4 are exploded perspective views of the cable connecting device of this example. FIGS. 3 and 4 illustrate a state where the waterproof cap is removed.

As illustrated in FIGS. 2 to 4, the seat lock cables 11a to 11c are configured as Bowden cables in which inner wires 13a to 13c are respectively accommodated within outer tubes 12a to 12c. Movement of the inner wires 13a to 13c is guided by the outer tubes 12a to 12c, and tension is transmitted by the movement of the inner wires 13a to 13c within the outer tubes 12a to 12c. The Inner wires 13a to 13c protrude from the outer tubes 12a to 12c, and connecting portions 14a to 14c having a spherical shape are respectively provided at tip ends of the inner wires 13a to 13c.

Casing caps 15a to 15c having a cylindrical shape are respectively provided at tip ends of the outer tubes 12a to 12c. The casing caps 15a to 15c are integrated with the outer tubes 12a to 12c by insert molding, making it difficult for the casing caps 15a to 15c to come off the outer tubes 12a to 12c. The casing caps 15a to 15c have tapered tip portions, and the inner wires 13a to 13c protrude from the tip portions of the casing caps 15a to 15c. The casing caps 15a to 15c have annular recesses (recesses) 16a to 16c formed in their outer circumferential surfaces.

A joint cap (joint cap) 21 is attached to the outer tubes 12a, 12b via the casing caps 15a, 15b. The joint cap 21 is made up of a pair of cap parts 22 separated in a cable radial direction (vertical direction in the figure). Parting surfaces of the pair of cap parts 22 are in contact with each other so as to be separable from each other, and the pair of cap parts 22 are merely in contact with each other but are not fixed to each other. The casing caps 15a, 15b are pinched between the pair of cap parts 22, thereby forming the cylindrical cap shape of the joint cap 21.

One end of the joint cap 21 forms a cap holding portion 23 having an elliptical cylindrical shape, and the other end of the joint cap 21 forms a case holding portion 24 having a rectangular cylindrical shape. A pair of holding holes for the casing caps 15a, 15b are formed in the cap holding portion 23, and annular protrusions (protrusions) 25a, 25b are formed on inner circumferential surfaces that define the pair of holding holes. The annular protrusions 25a, 25b of the cap holding portion 23 fit into the annular recesses 16a, 16b of the casing caps 15a, 15b, so that the joint cap 21 is positioned in an axial direction relative to the casing caps 15a, 15b.

An outer circumferential surface of the case holding portion 24 is formed to correspond to an inner circumferential surface of a joint case 45 which will be described below. Low protrusions 28 protrude from upper and lower parts of the outer circumferential surface of the case holding portion 24, and a through hole 26 is formed near the low protrusions 28, penetrating the case holding portion 24 in a direction perpendicular to an axis. In addition, a flange 27 protrudes from the outer circumferential surface between the cap holding portion 23 and the case holding portion 24, and one end of the joint case 45 abuts against the flange 27. An amount of protrusion of the flange 27 and a thickness of the joint case 45 are substantially equal, and an outer circumferential surface of the flange 27 and an outer circumferential surface of the joint case 45 are formed to be substantially flush with each other.

A joint cap (joint cap) 31 is attached to the outer tube 12c via the casing cap 15c. The joint cap 31 is also made up of a pair of cap parts 32, similar to the joint cap 21. The other end of the joint cap 31 forms a cap holding portion 33 having a cylindrical shape, and one end of the joint cap 31 forms a case holding portion 34 having a rectangular cylindrical shape. An annular protrusion (protrusion) 35 for positioning that fits into an annular recess 16c of the casing cap 15c is formed on an inner circumferential surface of the cap holding portion 33.

An outer circumferential surface of the case holding portion 34 is formed to correspond to an inner circumferential surface of the joint case 45 which will be described below. Low protrusions 38 protrude from upper and lower parts of the outer circumferential surface of the case holding portion 34, and a through hole 36 is formed near the low protrusions 38, penetrating the case holding portion 34 in a direction perpendicular to an axis. In addition, a flange 37 protrudes from the outer circumferential surface between the cap holding portion 33 and the case holding portion 34, and one end of the joint case 45 abuts against the flange 37. Thus, the joint cap 31 is configured substantially similarly to the joint cap 21, except that it is attached to one casing cap 15c.

The inner wires 13a to 13c of the seat lock cables 11a to 11c are hooked onto a joint slider 41 in the joint case 45, which will be described below. The joint slider 41 is formed in a rectangular parallelepiped shape that is long in a cable axial direction, and a pair of accommodation grooves 42, 43 are formed in the joint slider 41 along a longitudinal direction. Cable passage grooves connected to the pair of accommodation grooves 42, 43 are cut into an end wall at one longitudinal end of the joint slider 41, and a cable passage groove connected to the accommodation groove 42 is cut into an end wall at the other longitudinal end of the joint slider 41.

The connecting portion 14a of the inner wire 13a is accommodated on one end side of the accommodation groove 42, the connecting portion 14b of the inner wire 13b is accommodated on one end side of the accommodation groove 43, and the connecting portion 14c of the inner wire 13c is accommodated on the other end side of the accommodation groove 42. When the joint slider 41 is pulled by the inner wire 13a, the connecting portion 14b of the inner wire 13b slides freely, and the joint slider 41 pulls the inner wire 13c. When the joint slider 41 is pulled by the inner wire 13b, the connecting portion 14a of the inner wire 13a slides freely, and the joint slider 41 pulls the inner wire 13c.

The joint case 45 of the cable connecting device 20 is formed in a rectangular cylindrical shape with both ends open. The joint slider 41 is slidably accommodated inside the joint case 45. The joint cap 21 is attached to one end of the joint case 45, and the joint cap 31 is attached to the other end of the joint case 45. Since the joint case 45 is formed in an inseparable cylindrical shape, the pair of joint caps 21, 31 fit into both ends of the joint case 45, thereby maintaining the integrity of the plurality of cap parts 22, 32.

A plurality of recesses 46 are formed on the inner circumferential surface of both ends of the joint case 45 in correspondence with low protrusions 28, 38 of the pair of joint caps 21, 31. The pair of joint caps 21, 31 are temporarily secured by fitting the low protrusions 28, 38 into the plurality of recesses 46 in the joint case 45. In this case, since the low protrusions 28, 38 are formed low and the plurality of recesses 46 are formed shallow, the low protrusions 28, 38 are lightly caught in the plurality of recesses 46, and thus the pair of joint caps 21, 31 are configured to be attachable to and detachable from the joint case 45 with a clicking sensation.

A pair of through holes 47 are formed on both ends of the joint case 45, passing through the joint case 45 in a direction perpendicular to an axis. When the pair of joint caps 21, 31 are attached to both ends of the joint case 45, the pair of through holes 47 of the joint case 45 are overlapped from the outside with the through holes 26, 36 of the pair of joint caps 21, 31. A connecting pin 49 is press-fitted into the through hole 26 of the joint cap 21 and the through hole 47 of the joint case 45, and a connecting pin 49 is press-fitted into the joint cap 31 and the through hole 47 of the joint case 45, thereby connecting the joint caps 21, 31 to the joint case 45.

A pair of waterproof caps 51 and 52 made of rubber are attached to both ends of the joint case 45. The pair of waterproof caps 51, 52 cover the pair of joint caps 21, 31 and both ends of the joint case 45 from the outside, preventing foreign matter such as moisture and dust from entering the inside of the pair of joint caps 21, 31 and the joint case 45. Since the joint case 45 is formed from a single member, it is not necessary to cover the entire joint case 45 with the waterproof caps 51, 52, but it is sufficient to cover only both ends of the joint case 45 where the members are attached with the waterproof caps 51, 52.

When assembling the cable connecting device 20 configured in this manner, parting surfaces of the pair of cap parts 22 of the joint cap 21 are brought together so as to pinch the casing caps 15a, 15b of the outer tubes 12a, 12b. Similarly, parting surfaces of the pair of cap parts 32 of the joint cap 31 are brought together so as to pinch the casing cap 15c of the outer tube 12c. In this case, the parting surfaces of the pair of cap parts 22 are separably aligned, and the parting surfaces of the pair of cap parts 32 are separably aligned.

The inner wires 13a, 13b of the seat lock cables 11a, 11b are hooked to one end of the joint slider 41, and the inner wire 13c of the seat lock cable 11c is hooked to the other end of the joint slider 41. In addition, the joint slider 41 is slidably accommodated inside the joint case 45. The joint cap 21 (a pair of cap parts 22) is attached to one end of the joint case 45, and the joint cap 31 (a pair of cap parts 32) is attached to the other end of the joint case 45. The joint case 45 maintains the integrity of the pair of cap parts 22 and the pair of cap parts 32.

The through hole 47 on one end side of the joint case 45 is aligned with the through hole 26 of the joint cap 21, and the through hole 47 on the other end side of the joint case 45 is aligned with the through hole 36 of the joint cap 31. The pair of connecting pins 49 are press-fitted into the through holes 26, 47 and the through holes 36, 47, and the pair of joint caps 21, 31 are connected to the joint case 45 via the pair of connecting pins 49. Then, the pair of waterproof caps 51, 52 are attached so as to cover both ends of the pair of joint caps 21, 31 and the joint case 45, and the cable connecting device 20 is assembled.

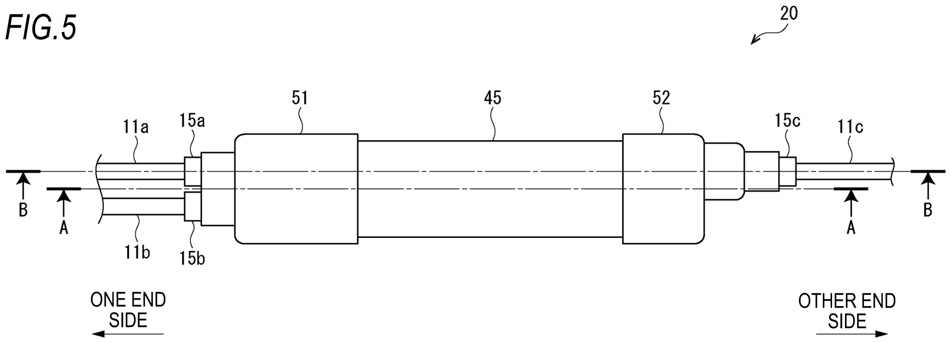

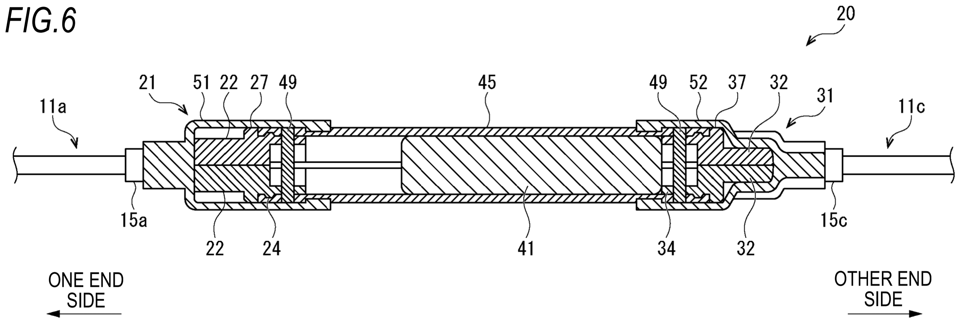

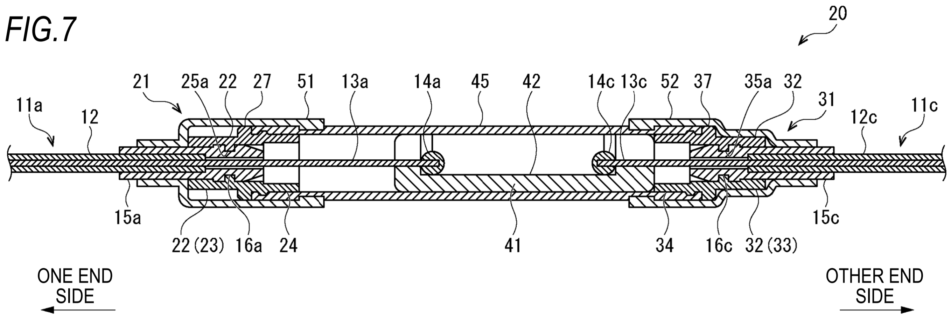

An internal structure of the cable connecting device will be described with reference to FIGS. 5 to 7. FIG. 5 is a plan view of the cable connecting device of this example. FIG. 6 is a cross-sectional view of the cable connecting device of FIG. 5 taken along a line A-A. FIG. 7 is a cross-sectional view of the cable connecting device of FIG. 5 taken along a line B-B.

As illustrated in FIGS. 5 to 7, the case holding portions 24 of the joint cap 21 are fitted into both ends of the joint case 45 having a cylindrical shape. The parting surfaces of the pair of cap parts 22 of the joint cap 21 are pressed together by the joint case 45. The joint case 45 is formed from a single member, and the joint case 45 is not significantly deformed even when subjected to an external force. Even when a reaction force of the seat lock cables 11a, 11b acts on the cable connecting device 20, the pair of cap parts 22 are fixed to the joint case 45 and the pair of cap parts 22 will not come apart.

The annular protrusions 25a, 25b of the pair of cap parts 22 are fitted into the annular recesses 16a, 16b of the casing caps 15a, 15b. The fitting positions of the annular recesses 16a, 16b and the annular protrusions 25a, 25b are located on a tip side of the casing caps 15a, 15b. By bringing the tips of the casing caps 15a and 15b closer to one end of the joint case 45, the above-mentioned fitting position is brought closer to the joint case 45. Since the deformation of the pair of cap parts 22 in a direction of separation is restricted by the joint case 45, the pair of cap parts 22 will not come off the casing cap 15 even when the outer tubes 12a, 12b are pulled.

The casing caps 15a, 15b are integrated with the outer tubes 12a, 12b of the seat lock cables 11a, 11b by insert molding. The outer tubes 12a, 12b and the casing caps 15a, 15b are integrated by insert molding, thereby increasing a tensile strength of the seat lock cables 11a, 11b and ensuring anti-theft performance. In this example, instead of using a crimping structure, the outer tubes 12a, 12b and the casing caps 15a, 15b are integrated by insert molding, thereby ensuring a tensile strength of 30 kgf or more.

The connecting pin 49 passes through the joint cap 21 (the pair of cap parts 22) and the joint case 45. The joint cap 21 and the joint case 45 are connected via the connecting pin 49, so that the joint cap 21 is prevented from coming off the joint case 45 even when the outer tubes 12a, 12b are pulled. One end of the joint case 45 is covered from the outside by the waterproof cap 51, and both ends of the connecting pin 49 are pressed down by the inner circumferential surface of the waterproof cap 51. Even when the connecting pin 49 becomes loose, the waterproof cap 51 prevents the connecting pin 49 from coming off.

The inner circumferential surface of the waterproof cap 51 is in pressure contact with the outer circumferential surface of the flange 27 of the joint cap 21. The waterproof cap 51 and the flange 27 are brought into liquid-tight contact with each other, thereby preventing the intrusion of moisture, dust, and other foreign matter into the inside of the waterproof cap 51. In addition, a fastening force of the waterproof cap 51 improves the integrity of the joint cap 21 and the joint case 45. Although the connection structure between the seat lock cables 11a, 11b and the cable connecting device 20 is described above, the connection structure between the seat lock cable 11c and the cable connecting device 20 is similar.

As described above, the inseparable joint case 45 of this example maintains the integrity of the cap parts 22, 32 of the pair of joint caps 21, 31. Even when the seat lock cables 11a to 11c are bent sharply and a strong reaction force acts on the cable connecting device 20, the cap parts 22, 32 will not come apart. In addition, the emergency key cylinder 3 can be added to the seat lock mechanism 4 with a simple structure. Since the seat lock cable is branched into two, the emergency key cylinder 3 can be added to the saddle-type vehicle without changing the layout of the cable extending from the unlocking switch 2 to the seat lock mechanism 4.

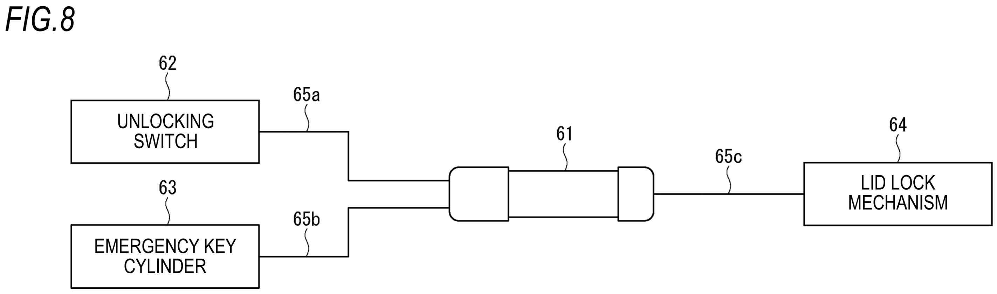

In this example, a cable connecting device that connects the seat lock cables extending from the unlocking switch and the emergency key cylinder to the seat lock cable extending from the seat lock mechanism is described, but the cable connecting device may be configured to connect a cable extending from an operator to a cable extending from an operation target. For example, as illustrated in FIG. 8, a cable connecting device 61 may connect lid lock cables 65a, 65b extending from an unlocking switch 62 and an emergency key cylinder 63 to a lid lock cable 65c extending from a power supply lid lock mechanism 64. Moreover, a fuel supply lid lock mechanism may be adopted as an operation target instead of the power supply lid lock mechanism.

In addition, in this example, the unlocking switch and the emergency key cylinder are exemplified as a plurality of operators, but the number of operators is not particularly limited. The number of operators may be one, or three or more. Further, in this example, the seat lock mechanism is exemplified as an operation target, but the number of operation targets is not particularly limited. There may be two or more operation targets. For example, the cable connecting device may connect a first cable extending from one operator and a second cable extending from one operation target.

In addition, in this example, the annular recess is provided on the outer circumferential surface of the casing cap, and the annular protrusion is provided on the inner circumferential surface of the cap part (joint cap), but the present invention is not limited to this configuration. An annular protrusion may be provided on an outer circumferential surface of a casing cap, and an annular recess may be provided on an inner circumferential surface of a cap part (joint cap).

Further, in this example, each joint cap is formed by a pair of cap parts, but it is sufficient that each joint cap is formed by a plurality of cap parts. For example, each joint cap may be formed by three or more cap parts.

In addition, in this example, the casing cap is integrated with the outer tube by insert molding, but it is sufficient that the casing cap is fixed to the outer tube.

Furthermore, the cable connecting device of this example is not limited to being used for seat lock cables of saddle-type vehicles, but may be used for other cables such as transmission cables of four-wheeled vehicles and push-pull cables of construction and agricultural machines. A saddle-type vehicle is not limited to all vehicles in which a rider sits astride a seat, but also includes scooter-type vehicles in which a rider does not sit astride a seat.

As described above, a first aspect is a cable connecting device (20) configured to connect a first cable (seat lock cable 11a, 11b) extending from an operator (unlocking switch 2, emergency key cylinder 3) and a second cable (seat lock cable 11c) extending from an operation target (seat lock mechanism 4) and configured to transmit tension from the first cable to the second cable, the device including a pair of joint caps (21, 31) attached to outer tubes of the first cable and the second cable, a joint slider (41) on which inner wires (13a to 13c) protruding from the outer tubes (12a to 12c) of the first cable and the second cable are hooked, and a joint case (45) formed in a cylindrical shape with both ends open, the pair of joint caps attached to both ends, and the joint slider accommodated inside, where each of the joint caps includes a plurality of cap parts (22, 32) divided in a cable radial direction, and parting surfaces of the plurality of cap parts are in contact with each other so as to be separable from each other, and the joint case is formed in an inseparable cylindrical shape, and integrity of the plurality of cap parts is maintained by inserting each of the joint caps into both ends of the joint case. According to this configuration, when the first cable is operated by the operator, the joint slider slides within the joint case and tension is transmitted to the second cable, thereby operating the operation target. Furthermore, since the integrity of the plurality of cap parts of each joint cap is maintained by the joint case having an inseparable cylindrical shape, the joint case does not become complicated by claw shapes such as snap fits.

In a second aspect, the operator includes a plurality of operators, the first cable includes a plurality of first cables, the plurality of first cables extending from the plurality of operators are connected to the second cable extending from the operation target, and tension is transmitted from one of the plurality of first cables to the second cable. According to this configuration, when one of the plurality of first cables is operated by the operator, the joint slider slides within the joint case, and tension is transmitted to the second cable, thereby operating the operation target. In addition to a main operator, an emergency operator can be added with a simple configuration in relation to the operation target. Since the first cables extend from the plurality of operators individually, the degree of freedom in layout of the plurality of operators is increased.

In a third aspect, a casing cap (15a to 15c), in the first or second aspect, is provided on the outer tubes of the first cable and the second cable, a recess (annular recesses 16a to 16c) provided on either an outer circumferential surface of the casing cap or an inner circumferential surfaces of the plurality of cap parts is fitted with a protrusion (annular protrusions 25a, 25b, 35) provided on the other, and a fitting position of the protrusion and the recess is positioned on a tip side of the casing cap. According to this configuration, the casing cap of the outer tube and each joint cap are fitted together with a simple structure. Since the tips of the casing caps are located close to both ends of the joint case, the fitting positions of the casing cap and each joint cap are located close to the joint case. Since the deformation of the plurality of cap parts in a direction of separation is restricted by the joint case, the plurality of cap parts will not come off the casing cap even when the outer tube is pulled.

In a fourth aspect, the casing cap, in the third aspect, is integrated with the outer tubes of the first cable and the second cable by insert molding. According to this configuration, the outer tube and the casing cap are integrated by insert molding, thereby increasing a tensile strength of the first and second cables and ensuring anti-theft performance.

In a fifth aspect, a pair of connecting pins (49), in any one of the first to fourth aspects, extend through the pair of joint caps and the joint case. According to this configuration, the pair of joint caps are prevented from coming off both ends of the joint case by the connecting pins.

In a sixth aspect, the cable connecting device, in any one of the first to fifth aspects, further includes a pair of waterproof caps (51, 52) for covering the pair of joint caps and both ends of the joint case from outside. This configuration prevents foreign matter such as moisture and dust from entering the pair of joint caps and the inside of the joint case. Since the joint case is formed from a single member, it is not necessary to cover the entire joint case with a waterproof cap, and it is sufficient to cover only both ends of the joint case where the members are attached with the waterproof caps.

In a seventh aspect, a pair of flanges (27, 37), in the sixth aspect, protrude from outer circumferential surfaces of the pair of joint caps, and both ends of the joint case abut against the pair of flanges, and outer circumferential surfaces of the pair of flanges are in pressure contact with inner circumferential surfaces of the pair of waterproof caps. According to this configuration, the waterproof cap and the flange are brought into liquid-tight contact, thereby preventing the intrusion of moisture, dust, and other foreign matter into the inside of the waterproof cap.

In an eighth aspect, the cable connecting device, in the fifth aspect, further includes a pair of waterproof caps for covering the pair of joint caps and both ends of the joint case from outside, where both ends of the pair of connecting pins are pressed against inner circumferential surfaces of the pair of waterproof caps. According to this configuration, even when the connecting pins become loose, the pair of waterproof caps prevent the pair of connecting pins from coming off.

In a ninth aspect, the cable connecting device, in the second aspect, is a cable connecting device mounted on a saddle-type vehicle, the plurality of operators are an unlocking switch (2) and an emergency key cylinder (3), and the operation target is a seat lock mechanism (4). According to this configuration, the integrity of the plurality of cap parts of each joint cap is maintained by the inseparable joint case, so that the plurality of cap parts will not come apart even when the first and second cables are bent sharply and a strong reaction force acts on the cable connecting device. In addition, an emergency key cylinder can be added to the seat lock mechanism with a simple structure. Since the first cable is bifurcated, an emergency key cylinder can be added to a saddle-type vehicle without changing the layout of the cable extending from the unlocking switch to the seat lock mechanism.

In a tenth aspect, the cable connecting device, in the second aspect, is a cable connecting device (61) mounted on a saddle-type vehicle, the plurality of operators are an unlocking switch (62) and an emergency key cylinder (63), and the operation target is a lock mechanism (64) of a fuel supply lid or a power supply lid. According to this configuration, the integrity of the plurality of cap parts of each joint cap is maintained by the inseparable joint case, so that the plurality of cap parts will not come apart even when the first and second cables are bent sharply and a strong reaction force acts on the cable connecting device. In addition, an emergency key cylinder can be added with a simple structure to the lock mechanism of the fuel supply lid or the power supply lid. Since the first cable is bifurcated, an emergency key cylinder can be added to a saddle-type vehicle without changing the layout of the cable extending from the unlocking switch to the lock mechanism of the fuel supply lid or the power supply lid.

Although the present example is described, other examples may be made by combining the above-described example and modification examples in whole or in part.

Furthermore, the technology of the present invention is not limited to the above-described example, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

4: seat lock mechanism (operation target)
2, 62: unlocking switch (operator)
3, 63: emergency key cylinder (operator)
11a, 11b: seat lock cable (first cable)
11c: seat lock cable (second cable)
12a to 12c: outer tube
13a to 13c: inner wire
14a to 14c: connecting portion
15a to 15c: casing cap
16a to 16c: annular recess (recess)
20, 61: cable connecting device
21, 31: joint cap (joint cap)
22, 32: cap part
25a, 25b, 35: annular protrusion (protrusion)
27, 37: flange
41: joint slider
45: joint case
49: connecting pin
51, 52: waterproof cap
64: lock mechanism (operation target)
65a, 65b: lid lock cable (first cable)
65c: lid lock cable (second cable)

## Claims

1. A cable connecting device (20) configured to connect a first cable (11a, 11b) extending from an operator (2, 3) and a second cable (11c) extending from an operation target (4) and configured to transmit tension from the first cable to the second cable, the device comprising:
a pair of joint caps (21, 31) attached to outer tubes of the first cable and the second cable;
a joint slider (41) on which inner wires (13a, 13b, 13c) protruding from the outer tubes (12a, 12b, 12c) of the first cable and the second cable are hooked; and
a joint case (45) formed in a cylindrical shape with both ends open, the pair of joint caps attached to both ends, and the joint slider accommodated inside,
wherein each of the joint caps includes a plurality of cap parts (22, 32) divided in a cable radial direction, and parting surfaces of the plurality of cap parts are in contact with each other so as to be separable from each other, and
wherein the joint case is formed in an inseparable cylindrical shape, and integrity of the plurality of cap parts is maintained by inserting each of the joint caps into both ends of the joint case.

2. The cable connecting device according to claim 1, wherein the operator includes a plurality of operators, the first cable includes a plurality of first cables, the plurality of first cables extending from the plurality of operators are connected to the second cable extending from the operation target, and tension is transmitted from one of the plurality of first cables to the second cable.

3. The cable connecting device according to claim 1, wherein a casing cap is provided on the outer tubes of the first cable and the second cable, a recess provided on either an outer circumferential surface of the casing cap or an inner circumferential surfaces of the plurality of cap parts is fitted with a protrusion provided on the other, and a fitting position of the protrusion and the recess is positioned on a tip side of the casing cap.

4. The cable connecting device according to claim 3, wherein the casing cap is integrated with the outer tubes of the first cable and the second cable by insert molding.

5. The cable connecting device according to claim 1 or 2, wherein a pair of connecting pins extend through the pair of joint caps and the joint case.

6. The cable connecting device according to claim 1 or 2, further comprising a pair of waterproof caps for covering the pair of joint caps and both ends of the joint case from outside.

7. The cable connecting device according to claim 6, wherein
a pair of flanges protrude from outer circumferential surfaces of the pair of joint caps, and both ends of the joint case abut against the pair of flanges, and
outer circumferential surfaces of the pair of flanges are in pressure contact with inner circumferential surfaces of the pair of waterproof caps.

8. The cable connecting device according to claim 5, further comprising:
a pair of waterproof caps for covering the pair of joint caps and both ends of the joint case from outside, wherein
both ends of the pair of connecting pins are pressed against inner circumferential surfaces of the pair of waterproof caps.

9. The cable connecting device according to claim 2, wherein
the cable connecting device is a cable connecting device mounted on a saddle-type vehicle,
the plurality of operators are an unlocking switch and an emergency key cylinder, and the operation target is a seat lock mechanism.

10. The cable connecting device according to claim 2, wherein
the cable connecting device is a cable connecting device mounted on a saddle-type vehicle,
the plurality of operators are an unlocking switch and an emergency key cylinder, and
the operation target is a lock mechanism of a fuel supply lid or a power supply lid.
